# EUROPÄISCHE PATENTANMELDUNG

(11) **EP 2 494 888 A1**
(43) Veröffentlichungstag der Anmeldung: **05.09.2012**
(21) Anmeldenummer: 12450012.5
(22) Anmeldetag: 02.03.2012
(51) Int. Cl.: A47C 16/00, A47C 7/38

(54) **Ruhe-Stützeinrichtung**

(30) Priorität: 04.03.2011 AT 1242011 U
(71) Anmelder: Pusca, Herwig, 1010 Wien (AT); Architekturbüro Dipl.Ing. Delugan-Meissl ZT-Gesellschaft M.B.H., 1040 Wien (AT)
(72) Erfinder: Pusca, Herwig, 1010 Wien (AT)
(74) Vertreter: Sonn & Partner Patentanwälte

(57) **Zusammenfassung**

Ruhe-Stützeinrichtung (1) mit einem aufblasbaren Stützteil (2), der allgemein quaderförmig ausgebildet ist und an dem zur Befestigung am Körper eines Benutzers dienende Gurte (3, 4, 5) angebracht sind; der Stützteil (2) ist mit einer äußeren Hülle (7) und wenigstens einem im Inneren der Hülle aufgenommenen aufblasbaren Polster (8, 9) ausgebildet.

## Beschreibung

Die Erfindung betrifft eine Ruhe-Stützeinrichtung mit einem aufblasbaren Stützteil, der allgemein quaderförmig ausgebildet ist und an dem zur Befestigung am Körper eines Benutzers dienende Gurte angebracht sind.

Es ist bekannt, auf Reisen, etwa in Kraftfahrzeugen, aber auch in Flugzeugen, einen aufblasbaren Nacken-/Kopf-Stützpolster als Stützeinrichtung für den Kopf zu verwenden. Dieser Nacken-Stützpolster hat üblicherweise in Draufsicht eine U-Form, so dass der Kopf nicht nur im Hinterkopfbereich, sondern auch seitlich abgestützt wird. Mit diesem Polster ist jedoch nur eine ungenügende Stützung des Kopfes möglich, und es muss der Oberkörper von der jeweiligen Person in der korrekten aufrechten Position gehalten werden.

In Flugzeugen kommt als Schwierigkeit hinzu, dass die Sitzreihen außerordentlich eng sind, so dass ein Abstützen des Oberkörpers an der Körpervorderseite kaum in Frage kommt; außerdem sind oft auch die nur sehr eingeschränkt beweglichen Rücklehnen der Sitze in Flugzeugen hinderlich.

In der US 6,042,185 ist ein quaderförmiger aufblasbarer Polster geoffenbart, der zur Abstützung des Kopfes dient und dabei auf dem Oberschenkeln der jeweiligen Person aufliegt. Im Inneren des quaderförmigen, aufblasbaren Posters sind Wände vorgesehen, die den Polster beim Abstützen des Kopfes stabilisieren sollen. Der Polster ist einteilig angeführt, was hygienisch nachteilig ist, da der Polster nicht einfach an der Außenseite gereinigt werden kann.

Aus der WO 2007/068950 ist ferner eine Polstereinrichtung bekannt, bei der eine allgemeine Stütz- oder Trägereinheit vorgesehen ist, die nicht aufblasbar ist, jedoch einen aufblasbaren kleinen Kinn-Stützpolster trägt. Dieser Stützpolster kann von der Trageinheit abgenommen werden, wobei hierfür beispielsweise eine Klettverschluss-Verbindungseinrichtung vorgesehen ist.

Beide Polstereinrichtungen besitzen weiters Gurte zur Befestigung am Körper des Benützers.

Es ist nun Aufgabe der Erfindung, eine Stützeinrichtung mit einem aufblasbaren Stützteil vorzuschlagen, die einen hohen Komfort bietet, vor allem wenn es um das Abstützen des Oberkörpers und Kopfs in Flugzeugen geht, und die dabei positionsstabil ist und auch im Fall von engen Sitzreihen eine gute Abstützung ermöglicht; weiters soll diese Stützeinrichtung adäquaten Hygieneanforderungen gerecht werden und eine einfache Reinigung der Außenseite ermöglichen.

Demgemäß zeichnet sich die erfindungsgemäße Ruhe-Stützeinrichtung mit einem aufblasbaren Stützteil wie eingangs angegeben dadurch aus, dass der Stützteil mit einer äußeren Hülle und wenigstens einem im Inneren der Hülle aufgenommenen aufblasbaren Polster ausgebildet ist.

Der aufblasbare Stützteil ist bei der vorliegenden Stützeinrichtung allgemein quaderförmig gestaltet, wobei seine Abmessungen so bemessen sein können, dass der Stützteil auch problemlos im Fall von engen Sitzreihen, wie in Flugzeugen, verwendet werden kann. Beispielsweise kann der quaderförmige Stützteil eine Höhe von ungefähr 40 cm, eine Breite von ungefähr 20 cm und eine Tiefe von ungefähr 15-20 cm haben. Selbstverständlich sind auch andere Größen, je nach Personengröße (ob Kind, Erwachsener etc.) denkbar.

Unter "allgemein quaderförmig" sind hier auch Gestalten des Stützteils zu verstehen, die von einer exakt quaderförmigen Gestalt, mit exakt rechteckigen, ebenen Teilflächen und rechten Winkeln, abweichen, d.h. es können z.B. durchaus etwas konkave (v.a. auf der dem Benutzer zugewandten Seite) oder konvexe Flächen, ebenso wie eine sich z.B. von unten nach oben verjüngende Konfiguration etc. vorliegen; wichtig ist nur, dass ein Stützteil in der Art eines "Blocks" zum Abstützen von Unterarmen und Kopf gegeben ist.

Bei der Verwendung kann sich die jeweilige Person auf der Oberseite des Block-Stützteils mit den Unterarmen und mit dem Kopf abstützen, wobei auch ein relativ angenehmes Schlafen ermöglicht wird. Durch die Befestigung des Stützteils am Körper des Benutzers mit Hilfe der Gurte bleibt der Stützteil auch sicher in seiner Position, d.h. er kann nicht seitlich oder nach vorne wegrutschen, so dass ein sicheres Abstützen des Kopfs und der Arme ermöglicht wird. Mit seiner Unterseite liegt der Stützteil auf den Oberschenkeln des Benutzers auf.

Aus Hygienegründen ist der Stützteil mit einer äußeren Hülle und wenigstens einem im Inneren der Hülle aufgenommenen, aufblasbaren Polster ausgebildet. Dadurch kann die äußere Hülle gesondert gereinigt, insbesondere gewaschen werden, was dann kaum möglich wäre, wenn der Stützteil direkt ein aufblasbarer, aus dichtem Gummimaterial bestehender Polster, ohne abnehmbare Hülle, wäre.

Wenn zwei aufblasbare Polster in der Hülle aufgenommen sind, so ergibt sich an der Oberseite des Stützteils im Bereich der Schnittstelle zwischen den beiden Polstern beim Abstützen des Kopfs eine natürliche Einbuchtung, die für das Abstützen einen zusätzlichen Komfort bietet.

Um ein diesen Komfort unter Umständen beeinträchtigendes gegenseitiges Verrutschen der beiden Polster bei der Verwendung zu verhindern, ist es weiters günstig, wenn die zwei Polster an ihren einander zugewandten Flächen miteinander, z.B. durch Verkleben, verbunden sind. Auch ein Verbinden mittels Velcro-Bändern (Klettverschluss-Bändern) oder dergl. wäre denkbar.

Eine vorteilhafte Ausführungsform zeichnet sich ferner dadurch aus, dass die Hülle zumindest an ihrer in der Gebrauchsstellung oberen Seite mit einem Schweiß-mindernden Material beschichtet, z.B. beflockt, ist.

Um einerseits das Anbringen der Hülle über dem Polster oder den Polstern und überdies eine einfache Reinigung zu ermöglichen, besteht die Hülle zweckmäßig aus einem elastischen textilen Gewebe.

Um den Komfort bei der Verwendung des Stützteils zu optimieren, ist es auch von Vorteil, wenn der bzw. jeder aufblasbare Polster ein an der in der Gebrauchsstellung des Stützteils unteren Seite befindliches Aufblasventil aufweist. Dadurch werden störende Teile, nämlich Aufblasventile, an der Oberseite, wo beispielsweise ein Kopf mit der Wange aufliegt, vermieden.

Um den bzw. die Polster in der Hülle leicht unterbringen zu können und um gegebenenfalls einen einfachen Zugang zum jeweiligen Aufblasventil zu erlangen, weist bevorzugt die Hülle an der in der Gebrauchsstellung des Stützteils unteren Seite eine Zugangs-Öffnung auf. Diese Öffnung kann verschließbar sein, und sie kann so groß sein, dass der oder die Polster nach unten aus der Hülle entfernt werden können.

Um den Komfort beim Auflegen bzw. Abstützen des Kopfs zusätzlich zu erhöhen, ist es weiters auch günstig, wenn an der in der Gebrauchsstellung oberen Seite des Stützteils ein komprimierbares Kissen, z.B. in Form einer Schaumstoffplatte, angebracht ist.

Um ein Verrutschen des komprimierbaren Kissens zu verhindern, ist es zweckmäßig, wenn das komprimierbare Kissen innerhalb der Hülle, oberhalb des Polsters bzw. der Polster, angebracht, z.B. mit der Hüllen-Oberseite vernäht, ist.

Für ein sicheres "Anlegen" des Stützteils ist es günstig, wenn zwei Schulter-Gurte sowie ein Beckengurt vorgesehen sind. Überdies kann auch ein unter den Achseln eines Benutzers anlegbarer Rücken-Gurt vorgesehen sein.

Die Erfindung wird nachfolgend anhand von in der Zeichnung veranschaulichten bevorzugten Ausführungsbeispielen, auf die sie jedoch nicht beschränkt sein soll, noch weiter erläutert. In der Zeichnung zeigen im Einzelnen:
Fig. 1 eine schaubildliche Ansicht einer Ausführungsform der vorliegenden Stützeinrichtung;
Fig. 2 eine Draufsicht auf diese Stützeinrichtung;
Fig. 3 eine Seitenansicht dieser Stützeinrichtung, wobei mit strichlierten Linien auch die innen liegenden aufblasbaren Polster veranschaulicht sind;
Fig. 4 eine Vorderansicht der Stützeinrichtung;
Fig. 5 einen Zuschnitt aus textilem Material für die Hülle der Stützeinrichtung gemäß Fig. 1 bis 4;
Fig. 6 eine Draufsicht auf ein innerhalb der Hülle anzubringendes komprimierbares Kissen; und
Fig. 7 die vorliegende Stützeinrichtung bei Verwendung durch eine Person auf einem Sitz, beispielsweise einem Flugzeug-Sitz, in einer Seitenansicht.

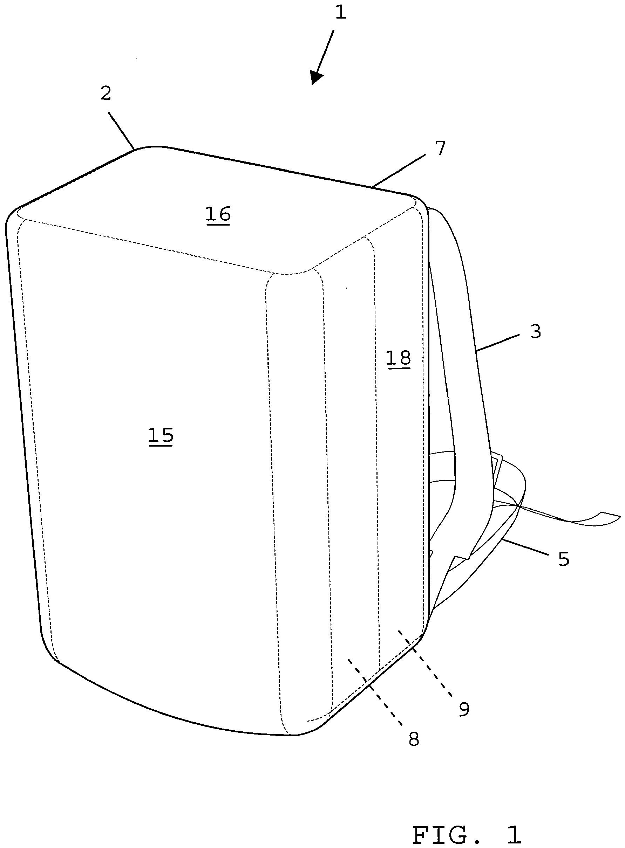

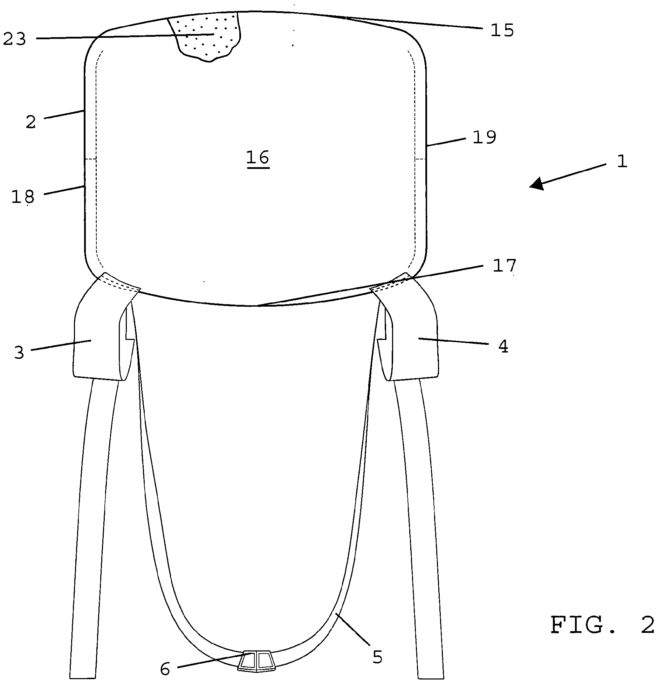

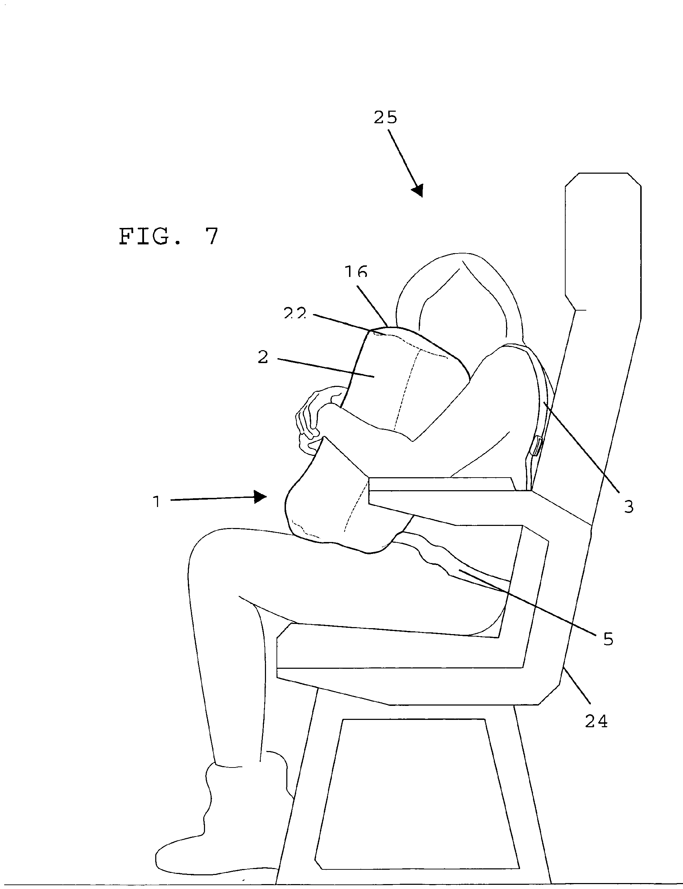

In den Fig. 1 bis 4 ist eine Stützeinrichtung 1 gezeigt, die einen allgemein blockförmigen oder quaderförmigen Stützteil 2 aufweist. An diesen Stützteil 2 sind Gurte zur Befestigung des Stützteils an einem Körper eines Benutzers (siehe auch Fig. 7) angebracht, und zwar - ähnlich wie bei einem Rucksack - zwei Rückentraggurte oder Schulter-Gurte 3, 4 sowie zusätzlich ein Beckengurt 5. Diese Gurte 3, 4, 5 sind üblicherweise in ihrer Länge verstellbar, wie beispielsweise in Fig. 2 bei 6 für den Beckengurt 5 angedeutet ist, um so eine Anpassung der Länge an den jeweiligen Benutzer zu ermöglichen.

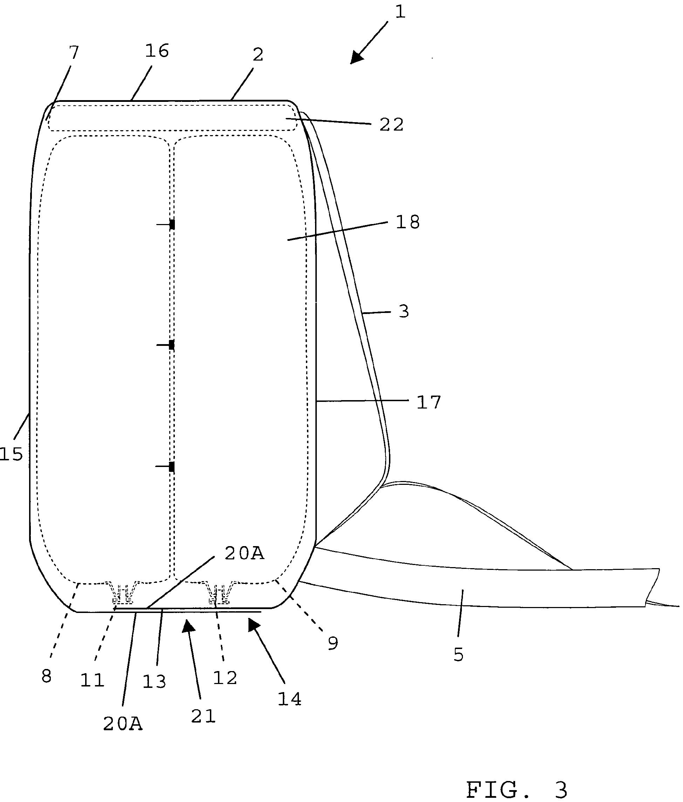

Der Stützteil 2 weist eine äußere Hülle 7 auf, die entsprechend Rucksack-artig ausgebildet ist, und in deren Inneren zwei aufblasbare Polster 8, 9 aufgenommen sind. Diese Polster sind in den Fig. 1 und 3 mit unterbrochenen Linien angedeutet, und sie weisen gemäß Fig. 3 an ihrer Unterseite Aufblasventile 10 bzw. 11 auf. An dieser Unterseite der Stützeinrichtung 1 ist die Hülle 7 mit einer Öffnung 14 ausgebildet, die zum einen einen Zugang zu den Aufblasventilen 11, 12 ermöglicht, und die andererseits, falls die Polster 8, 9 aus der Hülle 7 entfernt bzw. in diese wieder eingesetzt werden sollen, groß genug ist, um dieses Herausnehmen bzw. Einsetzen der Polster 8, 9 zu ermöglichen.

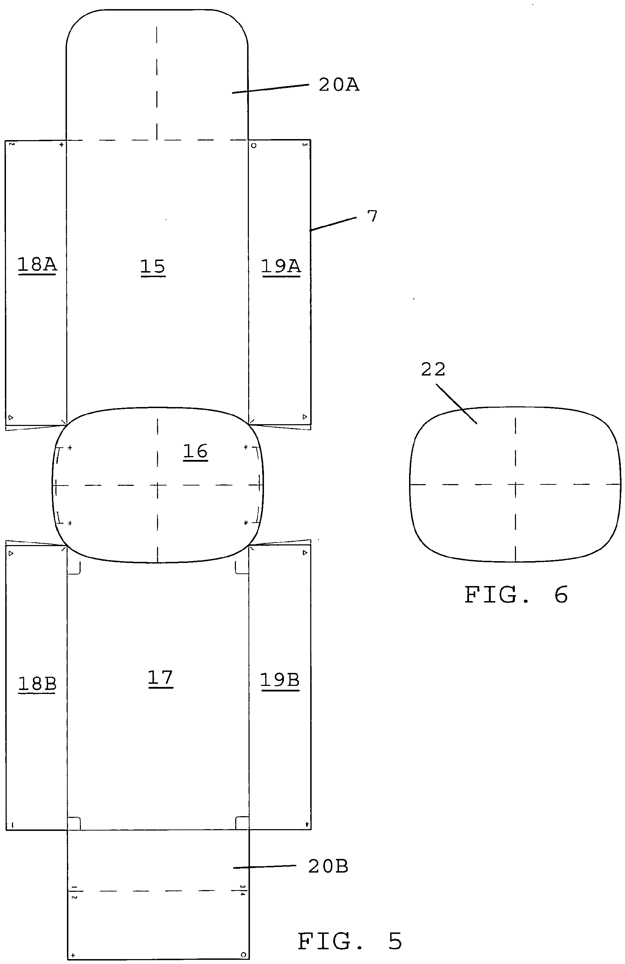

Bevorzugt ist die Hülle 7 aus einem in Fig. 5 gezeigten Zuschnitt aus einem elastischen textilen Gewebe gebildet. Wie dabei aus Fig. 5 ersichtlich ist, sind ein Vorderteil 15, ein Oberteil 16 und ein Rückenteil 17 in einem Stück vorgesehen; überdies stehen vom Vorderteil 15 und vom Rückenteil 17 lappenförmige Wandteile 18A, 18B bzw. 19A, 19B zur Bildung der Seitenwände der Hülle 7 ab, um nach Zusammenlegen die Seitenwände 18 bzw. 19 des Stützteils 2 zu bilden.

Schließlich stehen vom Vorderwand-Teil 15 und vom Rückenwand-Teil 17 noch Bodenteile 20A, 20B ab, die, wie insbesondere aus Fig. 3 ersichtlich ist, einander im zusammengenähten Zustand der Hülle 7 überlappen und dabei eine Zugangs-Öffnung 21 an der Unterseite des Stützteils 2 verschließen. Bei Auseinanderbewegen der Bodenteile 20A, 20B, entweder nur teilweise oder zur Gänze, können einerseits die Aufblasventile 11, 12 erreicht werden, um so die Polster 8, 9 aufblasen oder die Luft aus diesen Polstern 8, 9 ablassen zu können; andererseits können, wenn die Zugangs-Öffnung 21 durch Wegklappen der Bodenteile 20A, 20B vollständig geöffnet wird, die Polster 8, 9, vorzugsweise im Zustand mit abgelassener Luft, aus der Hülle 7 herausgenommen werden. In entsprechender Weise können die Polster 8, 9 von unten her durch die Zugangs-Öffnung 21 wieder in die Hülle 7 eingesetzt werden.

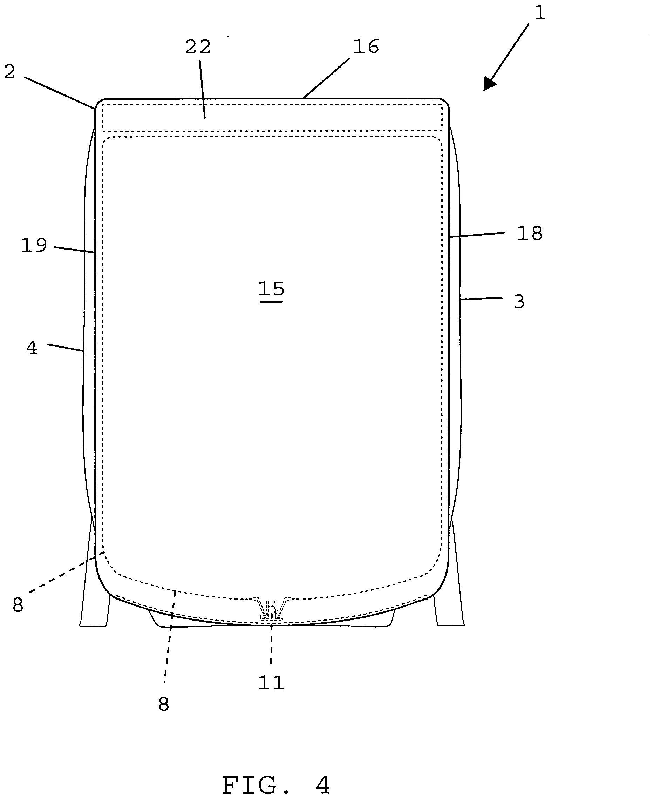

An der Oberseite des Stützteils 2 ist direkt unterhalb des Kopfteils 16 ein insbesondere aus Fig. 3 und 4 ersichtliches komprimierbares Kissen, z.B. in Form einer allgemein rechteckigen Schaumstoffplatte, mit gerundeten Ecken, untergebracht. Dieses Kissen 22 wird bevorzugt an der Hülle 7, mehr im Einzelnen an deren Kopfteil oder Oberteil 16, fixiert, z.B. durch Vernähen.

Das Kissen 22 besteht bevorzugt aus einer weichen, komprimierbaren Schaumstoffplatte. Die Polster 8, 9 können hingegen beispielsweise aus einem luftdichten PVC-Material hergestellt sein. Die Hülle 2 wird wie erwähnt aus einem elastischen textilen Material gefertigt, wie etwa aus dem unter der Bezeichnung "Lurapret" bekannten Material. Dieses Material kann an der Außenseite, insbesondere an der Oberseite (Oberteil) 16, zusätzlich mit einem Schweiß-mindernden Material beschichtet, insbesondere beflockt, sein, wie nur ganz schematisch in Fig. 2 in einem Teilbereich bei 23 angedeutet ist.

In Fig. 7 ist schließlich die vorliegende Stützeinrichtung 1 in einer Position in Verwendung durch eine auf einem Sitz 24 in einem Flugzeug sitzende Person 25 gezeigt, wobei ersichtlich ist, dass die Gurte, z.B. 3, 5, von der Person 25 angelegt wurden, wonach die Person 25 ihren Kopf auf der Oberseite 16 des Stützteils 2 auflegt, um so den Kopf abzustützen und zu ruhen. Die Oberseite des Stützteils 2 ist dabei dadurch, dass zwei Polster 8, 9 im Inneren vorgesehen sind, oberseitig leicht einbuchtbar, was den Komfort beim Auflegen des Kopfs vergrößert. Zusätzlich ergibt sich naturgemäß eine bequeme Auflage durch das Kissen 22. Wie weiter aus Fig. 7 ersichtlich ist, liegt der Stützteil 2 der vorliegenden Stützeinrichtung 1 in dieser Ruhestellung auf den Oberschenkeln der Person 25 auf, wobei ein Wegrutschen des Stützteils 2 vom Körper der Person durch die Gurte 3, 4 und 5 verhindert wird. Es ist also nicht notwendig, dass die Person 25 den Stützteil 2 wie in Fig. 7 gezeigt an sich gedrückt hält, es ist vielmehr auch denkbar, dass die Unterarme an der Oberseite 16 des Stützteils 2 aufgelegt werden, wonach der Kopf auf den Unterarmen bzw. auf dem Stützteil 2 platziert wird.

Die beiden Polster 8, 9 können an den einander zugewandten Flächen zumindest bereichsweise, wie in Fig. 3 schematisch angedeutet ist, miteinander verbunden sein, um ein gegenseitiges Verrutschen zu verhindern, wobei diese gegenseitige Verbindung beispielsweise durch Verkleben oder aber auch mit Hilfe von Klettverschluss-Stellen erfolgen kann.

## Patentansprüche

1. Ruhe-Stützeinrichtung (1) mit einem aufblasbaren Stützteil (2), der allgemein quaderförmig ausgebildet ist und an dem zur Befestigung am Körper eines Benutzers dienende Gurte (3, 4, 5) angebracht sind, **dadurch gekennzeichnet, dass** der Stützteil (2) mit einer äußeren Hülle (7) und wenigstens einem im Inneren der Hülle aufgenommenen aufblasbaren Polster (8, 9) ausgebildet ist.

2. Stützeinrichtung nach Anspruch 1, **dadurch gekennzeichnet, dass** zwei aufblasbare Polster (8, 9) in der Hülle (7) aufgenommen sind.

3. Stützeinrichtung nach Anspruch 2, **dadurch gekennzeichnet, dass** die zwei Polster (8, 9) an ihren einander zugewandten Flächen miteinander verbunden sind.

4. Stützeinrichtung nach Anspruch 3, **dadurch gekennzeichnet, dass** die zwei Polster (8, 9) durch Verkleben miteinander verbunden sind.

5. Stützeinrichtung nach einem der Ansprüche 1 bis 4, **dadurch gekennzeichnet, dass** die Hülle (7) zumindest an ihrer in der Gebrauchsstellung oberen Seite (16) mit einem Schweiß-mindernden Material beschichtet ist.

6. Stützeinrichtung nach Anspruch 5, **dadurch gekennzeichnet, dass** die Hülle (7) mit dem Schweiß-mindernden Material beflockt ist.

7. Stützeinrichtung nach einem der Ansprüche 1 bis 6, **dadurch gekennzeichnet, dass** die Hülle (7) aus einem elastischen textilen Gewebe besteht.

8. Stützeinrichtung nach einem der Ansprüche 1 bis 7, **dadurch gekennzeichnet, dass** der bzw. jeder aufblasbare Polster (8, 9) ein an der in der Gebrauchsstellung des Stützteils (2) unteren Seite befindliches Aufblasventil (11, 12) aufweist.

9. Stützeinrichtung nach einem der Ansprüche 1 bis 8, **dadurch gekennzeichnet, dass** die Hülle (7) an der in der Gebrauchsstellung des Stützteils (2) unteren Seite eine Zugangs-Öffnung (21) aufweist.

10. Stützeinrichtung nach einem der Ansprüche 1 bis 9, **dadurch gekennzeichnet, dass** an der in der Gebrauchsstellung oberen Seite (16) des Stützteils (2) ein komprimierbares Kissen (22) angebracht ist.

11. Stützeinrichtung nach Anspruch 10, **dadurch gekennzeichnet, dass** das komprimierbare Kissen (22) eine Schaumstoffplatte aufweist.

12. Stützeinrichtung nach Anspruch 10 oder 11, **dadurch gekennzeichnet, dass** das komprimierbare Kissen (22) innerhalb der Hülle (7), oberhalb des Polsters bzw. der Polster, angebracht ist.

13. Stützeinrichtung nach Anspruch 12, **dadurch gekennzeichnet, dass** das komprimierbare Kissen (22) mit der Hüllen-Oberseite (16) vernäht ist.

14. Stützeinrichtung nach einen der Ansprüche 1 bis 13, **dadurch gekennzeichnet, dass** zwei Schulter-Gurte (3, 4) sowie ein Beckengurt (5) vorgesehen sind.
